# EUROPÄISCHE PATENTANMELDUNG

(11) **EP 4 596 935 A1**
(43) Veröffentlichungstag der Anmeldung: **06.08.2025**
(21) Anmeldenummer: 25155604.9
(22) Anmeldetag: 03.02.2025
(51) Int. Cl.: F16K 31/02, F16K 37/00, F16K 99/00, F16K 1/38

(54) **NADELVERSCHLUSSDÜSE MIT ELEKTROAKTIVER POLYMERANTRIEBSANORDNUNG UND GEHÄUSE**

(30) Priorität: 02.02.2024 DE 102024103052
(71) Anmelder: Heitec- Heisskanaltechnik GmbH, 35099 Burgwald-Bottendorf (DE)
(72) Erfinder: KUSIC, Igor, 35108 Allendorf (DE)
(74) Vertreter: Gottfried, Hans-Peter

(57) **Zusammenfassung**

Nadelverschlussdüse (1), umfassend eine Düse (10) und eine Verschlussnadel (12), die an einem ersten Ende eine Nadelspitze (13) zum Verschluss der Düse (10) aufweist. Die Verschlussnadel (12) weist an einem der Nadelspitze (13) abgewandten zweiten Ende eine Polymerantriebsanordnung (20) auf, die ein elektroaktives Polymer umfasst, wobei sich das elektroaktive Polymer unter einer angelegten elektrischen Spannung ausdehnt und als Aktor (27) wirkt, und wobei das elektroaktive Polymer unter Belastung seine elektrischen Eigenschaften ändert und dadurch als Drucksensor (26) wirkt. Nach der Erfindung drückt die wenigstens eine Polymerantriebsanordnung (20) unter elektrischer Spannung, die als ein Steuersignal von einer Steuerungseinrichtung (30) bereitgestellt wird, als Antrieb die Nadelspitze (13) in die Düse (10), während die Nadelspitze (13) ohne Steuersignal im spannungsfreien Zustand aus der Düse (10) gleitet. Ein auf die Nadelspitze (13) wirkender Druck eines Fluids, das an der Düse (10) anliegt, führt an dem Drucksensor (26) zu einer Änderung elektrischer Eigenschaften, die als ein Sensorsignal der Steuerungseinrichtung (30) zur Auswertung zugeleitet wird, um das Sensorsignal dort zu einem Wert für einen an der Nadelspitze (13) vorherrschenden Fluiddruck verarbeitet zu werden. Gehäuse zur Aufnahme der wenigstens einen Polymerantriebsanordnung (20), wobei das Gehäuse eine Kühlung umfasst und wobei Gehäuse in axialer Richtung der Verschlussnadel verstellbar ist.

## Beschreibung

Die Erfindung betrifft eine Nadelverschlussdüse, deren Verschlussnadel einen Antrieb mittels eines elektroaktiven Polymers, das sich unter einer angelegten elektrischen Spannung sein Volumen ändert, aufweist. Ein elektroaktives Polymer ist in der Lage zur Umwandlung zwischen elektrischer und mechanischer Energie. Wird an das elektroaktive Polymer eine Spannung angelegt, dehnt es sich aus oder zieht sich zusammen, je nach Ausführung des Polymers, und bewegt dadurch die Verschlussnadel. Derartige Nadelverschlussdüsen sind aus dem Stand der Technik bekannt. Die Erfindung betrifft auch ein Gehäuse zur Aufnahme der wenigstens einen Polymerantriebsanordnung.

Die Druckschriften US 7 971 850 B2 und US 7 537 197 B2 beschreiben ein Nadelventil (Fig. 3D), das durch ein elektroaktives Polymer (372) angetrieben wird.

Nach der Druckschrift DE 10 2012 024 333 A1 ist ein Ventil vorgesehen, das ebenfalls durch ein elektroaktives Polymer (Absatz [0013]) angetrieben wird. Zusätzlich wird der Antrieb auch zur Detektion verwendet. In Fig. 4 ist zwar dazu nichts dargestellt, aber in der zugehörigen Beschreibung (Absatz [0032]) angegeben, dass das elektrische Antriebsmittel für das Ventilglied auch als Sensormittel zur Ermittlung von fluidbezogenen Größen und/oder einer Position des Ventilglieds verwendet wird. Die in der Funktionseinheit 30 enthaltene elektronische Schaltung dient zur Beeinflussung von elektrischen Signalen, die beispielsweise von einer Steuereinrichtung über ein Signalkabel 35 bereitgestellt werden und zur Weiterverarbeitung in der Funktionseinheit 30 und/oder im Ventilgehäuse 1 vorgesehen sind. Ergänzend oder alternativ kann die elektronische Schaltung auch Signale aus dem Ventilgehäuse 1 aufbereiten und verarbeiten und/oder über das Signalkabel 35 an die Steuereinrichtung übertragen.

Nach Absatz [0011] kann die Messeinrichtung beispielsweise einen Positionssensor für eine Position des Ventilglieds umfassen. Ergänzend oder alternativ kann die Messeinrichtung auch zur Ermittlung von fluidbezogenen Messwerten wie Temperatur, Strömungsgeschwindigkeit, Druck oder anderen, kontaktlos oder kontaktbehaftet messbaren Fluideigenschaften ausgebildet sein.

Es geht dabei in erster Linie um die drahtlose Übertragung der Signale durch die Wand des Ventils, eine Beschreibung einer Ausführungsform, wie der Antrieb angesteuert oder die Messwertsignale erzeugt und verarbeitet werden, ist nicht offenbart.

Aus der Druckschrift EP 3 470 809 B1 ist ein Drucksensor zum Einbau in eine Druckgussform bekannt, mit dem die Druckverhältnisse in der Kavität einer Druckgussform beim Einspritzen der Kunstharzmasse ermittelt werden können.

Es ist daher Aufgabe der vorliegenden Erfindung, eine einfache Einrichtung zur druckbasierten Steuerung einer Nadelverschlussdüse anzubieten.

Die Aufgabe wird gelöst durch eine Nadelverschlussdüse, umfassend eine Düse und eine Verschlussnadel, die an einem ersten Ende eine Nadelspitze zum Verschluss der Düse aufweist. Die Nadelspitze fährt in die Düse hinein, um diese zu verschließen.

Die Verschlussnadel weist an einem der Nadelspitze abgewandten zweiten Ende eine Polymerantriebsanordnung, auch als dielektrischer Elastomeraktor bzw. als dielektrischer Elastomersensor bezeichnet, auf, die ein elektroaktives Polymer umfasst. Das elektroaktive Polymer ändert unter einer angelegten elektrischen Spannung sein Volumen und wirkt als Aktor, als Antrieb. Das elektroaktive Polymer hat jedoch auch die Wirkung, dass es unter Belastung elektrische Eigenschaften ändert, z. B. eine elektrische Spannung abgibt und damit als Drucksensor wirkt. Alternativ zur elektrischen Spannung ist auch die Messung des Elektrodenwiderstands, der Impedanz sowie der Kapazität des elektroaktive Polymers möglich.

Nach der Erfindung bewegt die wenigstens eine Polymerantriebsanordnung unter elektrischer Spannung, die als ein Steuersignal von einer Steuerungseinrichtung bereitgestellt wird, als Antrieb die Nadelspitze in der Düse und bewegt, d. h. verschließt oder öffnet diese bzw. deren Querschnitt zumindest teilweise. Ohne Steuersignal im spannungsfreien Zustand gleitet nach der bevorzugten Ausführungsform die Nadelspitze durch Expansion des Polymers in die Düse, sodass die Düse in der Folge zumindest teilweise geschlossen ist. Demgegenüber zieht sich bei dieser Ausführungsform das Polymer bei anliegender Steuerspannung zusammen, sodass die Düse in der Folge zumindest teilweise geöffnet ist, wenn die Nadelspitze aus der Düse gezogen wird. Ebenso ist eine Anordnung vorgesehen, bei der umgekehrt die Düse bei anliegender Steuerspannung schließt, indem z. B. die Nadel an der von der Düse abgewandten Elektrode befestigt ist und durch das Polymer hindurchgeführt wird.

Ein insbesondere aus einer Kavität einer Spritzgussform auf die Nadelspitze wirkender Druck eines Fluids, das an der Düse anliegt, an dem Drucksensor zu einer Spannungsänderung führt, die als Sensorsignal der Steuerungseinrichtung, insbesondere einer Auswertungshardware, zugeleitet wird, um das Sensorsignal dort zu einem Wert für einen an der Nadelspitze vorherrschenden Fluiddruck verarbeitet zu werden. Als Drucksensor ist die wenigstens eine Polymerantriebsanordnung oder alternativ ein Piezokristall eingesetzt.

Vorzugsweise ist als elektroaktives Polymer der Polymerantriebsanordnung ein dielektrisches Elastomer eingesetzt. Ein dielektrisches Elastomer besteht im Wesentlichen aus einem Dielektrikum, welches zwischen zwei Elektroden eingebettet ist. Als Besonderheit der elektrisch leitenden Elektroden und der dazwischen liegenden isolierenden Schicht sind die elastischen und weichen Eigenschaften der Materialien zu nennen, welche Formänderungen das dielektrische Elastomer erst ermöglichen. Obwohl der Aufbau aus drei einzelnen Schichten besteht, wird aufgrund der resultierenden funktionalen Einheit und im Hinblick auf gestapelte Aktoren auch von einem Elementaraktor oder einlagigen Aktor gesprochen. Der Aufbau des dielektrischen Elastomers kann im Wesentlichen flexibel gewählt werden, solange sie als die bevorzugte Wirkrichtung eine unidirektionale Ausdehnung ermöglicht. Verfahren zur Ansteuerung und Varianten des Aufbaus der Steuerungseinrichtung sind aus dem Stand der Technik bekannt, beispielsweise aus Landgraf, Maximilian. 2020. Leistungselektronik für den Einsatz dielektrischer Elastomere in aktorischen, sensorischen und integrierten sensomotorischen Systemen. FAU Studien aus dem Maschinenbau Band 357. Erlangen: FAU University Press. DOI: 10.25593/978-3-96147-381-6.

Die Spannungsänderung, die der Steuerungseinrichtung zugeleitet wird, ist nach einer ersten Ausführungsform eine von dem Drucksensor auf einer von der wenigstens einen Polymerantriebsanordnung abgegebene Spannung durch mechanische Einwirkung der Verschlussnadel auf die Polymerantriebsanordnung, ohne dass das Steuersignal anliegt. Nach einer zweiten Ausführungsform ist die Spannungsänderung an dem Drucksensor eine Spannungsänderung des an der wenigstens einen Polymerantriebsanordnung anliegenden Steuersignals, also eine Differenz zwischen der von der Steuerungseinrichtung zugeführten Spannung und der tatsächlichen Spannung.

Die Spannungsänderung wird durch eine Änderung des Elektrodenwiderstands hervorgerufen. Der E-Modul der Elektroden eines Aktors sollte dazu deutlich kleiner oder maximal so groß sein, wie der des Dielektrikums. Dadurch wird sichergestellt, dass die Elektroden durch ihre mechanische Verbindung der aktorischen Verformung mechanisch nicht entgegenwirken. Ist diese Anforderung erfüllt, geben Messungen dehnungsabhängiger Elektrodenwiderstände Rückschlüsse auf die Verformung des Aktors. Weitere Aktorzustandserkennungen sind durch Messung des Elektrodenwiderstands, der Impedanz sowie der Kapazität des elektroaktive Polymers möglich.

Nach einer Ausführungsform der Nadelverschlussdüse ist die wenigstens eine Polymerantriebsanordnung als eine sensomotorische Einheit, als ein selbstfühlendes System, ausgeführt, bei der das elektroaktive Polymer sowohl als Aktor als auch als Drucksensor wirkt. Dazu wird die Differenz zwischen der von der Steuerungseinrichtung zugeführten Spannung und der tatsächlichen Spannung in der Steuerungseinrichtung ausgewertet. Verfahren zur Auswertung sind aus dem Stand der Technik bekannt, beispielsweise wie oben erwähnt.

Nach einer weiteren Ausführungsform der Nadelverschlussdüse umfasst die wenigstens eine Polymerantriebsanordnung ein erstes elektroaktives Polymer, das als Aktor wirkt, und ein zweites elektroaktives Polymer, das als Drucksensor wirkt. Der Aktor, der als Antrieb dient, und der Drucksensor werden somit durch unterschiedliche Leitungen mit der Steuerungseinrichtung. Dies steuert den Aktor über eine Steuerleitung und erhält über eine gesonderte Leitung, die Sensorleitung die Signale des Drucksensors in Form der von diesem abgegebenen elektrischen Spannung.

Vorgesehen ist der Einsatz einer sensomotorische Einheit aus Aktor und Sensor pro Verschlussnadel zum Steuern und Überwachen dieser Verschlussnadel. Alternativ ist der Einsatz eines dielektrischen Elastomeraktors pro Verschlussnadel zu Steuern dieser Verschlussnadel. Eine weitere Alternative sieht den Einsatz eines dielektrischen Elastomersensors pro Verschlussnadel zum Messen dieser Verschlussnadel vor.

Es hat sich als vorteilhaft erwiesen, wenn das erste elektroaktive Polymer und das zweite elektroaktive Polymer über ein gemeinsames Dielektrikum verbunden sind. Dadurch bilden Aktor und Sensor trotz der Funktionstrennung eine untrennbare Einheit. Da bei sind beispielsweise das erste elektroaktive Polymer und das zweite elektroaktive Polymer nach einer ersten Ausführungsform nebeneinander angeordnet. Nach einer zweiten Ausführungsform sind das erste elektroaktive Polymer und das zweite elektroaktive Polymer ineinander angeordnet, wobei der Sensor von dem Aktor auf derselben Ebene und auf demselben Dielektrikum umgeben ist. Nach einer alternativen Ausführungsform sind das erste elektroaktive Polymer und das zweite elektroaktive Polymer übereinander, auf zwei unterschiedlichen Ebenen, angeordnet.

Wird die erfindungsgemäße Nadelverschlussdüse als Teil eines Heißkanalsystems für den Spritzguss von Kunststoffteilen eingesetzt, dann ist das Fluid eine Kunstharzmasse, der Fluiddruck ein Schmelzedruck und die Nadelverschlussdüse. Nach einer vorteilhaften Weiterbildung sind mehrere Polymerantriebsanordnungen an einer Hubplatte zum Steuern mindestens einer Verschlussnadel, in der Regel jedoch eine Vielzahl von Verschlussnadeln, angeordnet.

Die Aufgabe der Erfindung wird weiterhin gelöst durch ein Gehäuse, das vorzugsweise aus Metall besteht und zur Aufnahme der wenigstens einen Polymerantriebsanordnung dient. Das Gehäuse umfasst eine Kühlung, um das das elektroaktive Polymer vor den hohen Temperaturen des Heißkanalsystems zu schützen, und ist in axialer Richtung der Verschlussnadel verstellbar, um die Verschlussnadel in der Position "geschlossen" einzustellen. Damit kann die gesamte Anordnung von

Anhand der Beschreibung von Ausführungsbeispielen und ihrer Darstellung in den zugehörigen Zeichnungen wird die Erfindung nachfolgend näher erläutert. Es zeigen:
Fig. 1: schematisch eine teilgeschnittene Ansicht einer Ausführungsform eines Heißkanalsystems mit einer erfindungsgemäßen Nadelverschlussdüse und
Fig. 2: schematisch eine teilgeschnittene Ansicht einer weiteren Ausführungsform eines Heißkanalsystems mit einer erfindungsgemäßen Nadelverschlussdüse, und
Fig. 3: schematisch drei perspektivische Ansichten von Ausführungsformen einer Polymerantriebsanordnung.

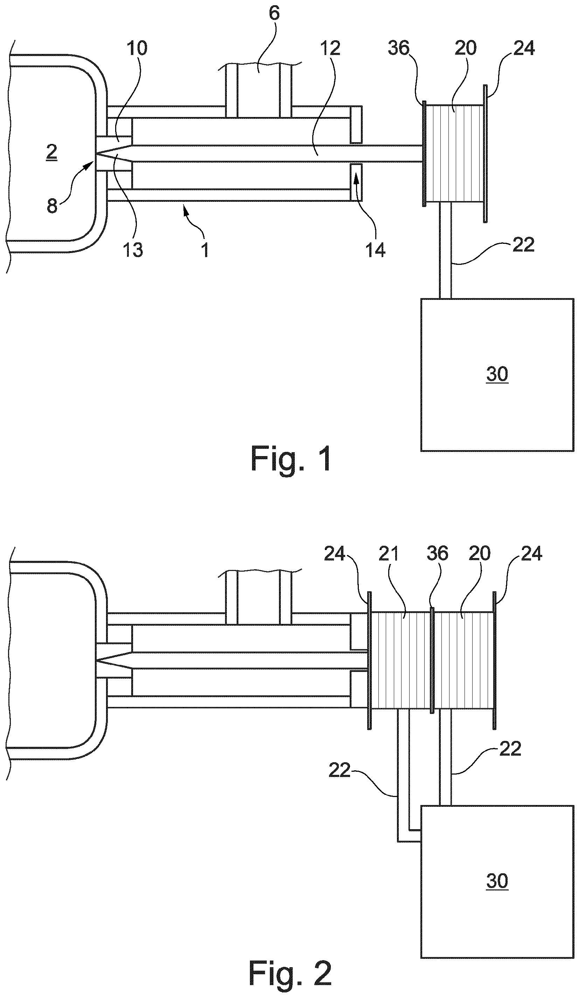

Fig. 1 zeigt schematisch eine teilgeschnittene, ausschnittsweise Ansicht einer Ausführungsform eines Heißkanalsystems mit einer erfindungsgemäßen Nadelverschlussdüse 1. Die Nadelverschlussdüse 1 umfasst die Düse 10 und die Verschlussnadel 12, die in die Düse 10 einfahren und diese verschließen kann. Dargestellt ist die verschlossene Stellung, in der die Verschlussnadel 12 mit ihrer Spitze bis an die Angussbuchse 8 und die Kavität 2 des Spritzgießwerkzeug 4, das nur teilweise dargestellt ist, heranreicht.

Um diesen Hub der Verschlussnadel 12 auszuführen, ist außerhalb eines Schmelzeverteilers 6 die Polymerantriebsanordnung 20, basierend auf einem elektroaktiven Polymer, angeordnet. Die Verschlussnadel 12 wird durch die Dichtbuchse 14 zur Nadelplatte 36 geführt, die den in der Polymerantriebsanordnung 20 erzeugten Druck auf die Verschlussnadel 12 überträgt. Die Polymerantriebsanordnung 20 stützt sich auf der der Verschlussnadel 12 abgewandten Seite am Gegenhalter 24 ab. Wird aus der Steuerungseinrichtung 30 über die Steuerleitung 22 der Polymerantriebsanordnung 20 ein Steuersignal zugeführt, so zieht sich dieser zusammen und zieht die Verschlussnadel 12 aus der Düse 10, während die Polymerantriebsanordnung 20 ohne ein Steuersignal expandiert und die Verschlussnadel 12 in die Düse 10 hineindrückt. Der dargestellte Zustand entspricht der Polymerantriebsanordnung 20 ohne angelegte Spannung, also im expandierten Zustand.

Die Steuerungseinrichtung 30 ist darüber hinaus ausgeführt, über die Steuerleitung 22 zugeführte Sensorströme zu registrieren zu verarbeiten und in die Ansteuerung der Polymerantriebsanordnung 20 einfließen zu lassen. Die Sensorströme werden hervorgerufen, wenn auf die Polymerantriebsanordnung 20 eine Kraft einwirkt, da ein elektroaktives Polymer zur Umwandlung von elektrischer Energie in mechanische und umgekehrt ausgeführt ist. Dadurch können Informationen über die Druckverhältnisse in der Kavität 2 gewonnen werden. Dieses insbesondere von Bedeutung, wenn über den Schmelzeverteiler mehrere Kavität 2 versorgt werden, in denen überall derselbe Druck vorherrschen soll. Dazu müssen die jeweils zugeordneten Polymerantriebsanordnungen 20 entsprechend angesteuert werden.

Darüber hinaus verarbeitet die Steuerungseinrichtung 30 auch Informationen, die auf den Druck in der Kavität 2 rückschließen lassen, wenn die Verschlussnadel 12 bewegt wird, indem über die Steuerleitung 22 ein Steuerimpuls zugeführt wird. Je nach Gegendruck des Fluids, der aus der Kavität 2 rückwirkt, ist eine höhere oder niedrigere Spannung für den Steuerimpuls erforderlich. Deren Höhe gewährt den Rückschluss auf die Druckverhältnisse und wird ebenfalls zur Steuerung der Verschlussnadel 12 in der Steuerungseinrichtung 30 verarbeitet.

Fig. 2 zeigt schematisch eine teilgeschnittene, ausschnittsweise Ansicht einer weiteren Ausführungsform eines Heißkanalsystems mit einer erfindungsgemäßen Nadelverschlussdüse 1. Während der Aufbau im Wesentlichen mit der Darstellung in Fig. 1 übereinstimmt, zeigen sich Unterschiede bei der Polymerantriebsanordnung 20. Diese wird ergänzt durch eine zweite Polymerantriebsanordnung 20, die gegen einen eigenen Gegenhalter 24 und ebenfalls auf die Nadelplatte 26 wirkt, jedoch in gegenläufiger Richtung. Dadurch kann die Düse 10 weiter geöffnet werden, in dem die zweite Polymerantriebsanordnung 20 die erste Polymerantriebsanordnung 20 im Ruhezustand komprimiert. Darüber hinaus kann durch die dargestellte Anordnung eine genauere Ermittlung des auf die Verschlussnadel 12 wirkten Fluiddrucks in der Kavität 2 geschlossen werden und damit eine exaktere Steuerung vorgenommen werden.

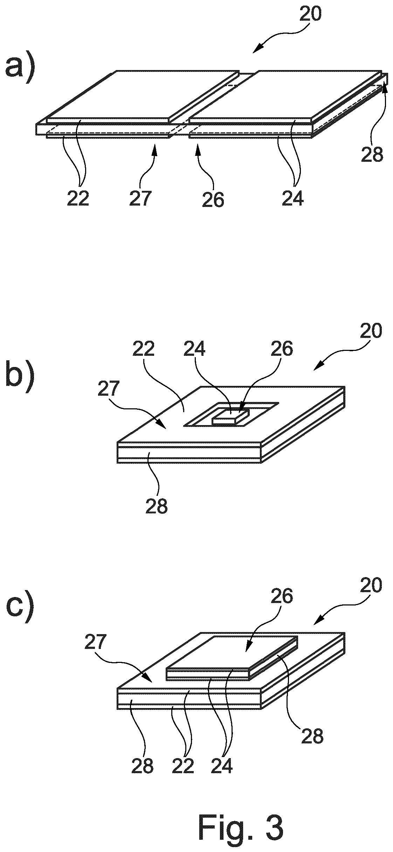

Fig. 3 zeigt schematisch drei perspektivische Ansichten a), b) und c) von Ausführungsformen einer Polymerantriebsanordnung 20, die jeweils einen Aktor 27, der dem Antrieb der hier nicht dargestellten Verschlussnadel 12 dient, und einen Drucksensor 26 aufweist. Beidseits des Dielektrikums 28 ist beim Aktor 27 das erste elektroaktive Polymer 22 angeordnet, das unter einer elektrischen Spannung linear kontrahiert, und beim Drucksensor 26 das zweite elektroaktive Polymer 24 angeordnet.

In Ansicht a) sind Aktor 27 und Drucksensor 26 nebeneinander auf einer Ebene, auf dem gemeinsamen Dielektrikum 28, angeordnet. In Ansicht b) umgibt der Aktor 27 den Drucksensor 26, die beide auf einer Ebene, ebenfalls auf dem gemeinsamen Dielektrikum 28, angeordnet sind. Demgegenüber besitzen in Ansicht c) der Aktor 27 und der Drucksensor 26 jeweils ein eigenes Dielektrikum 28. Der Drucksensor 26 ist auf dem elektroaktiven Polymer 22 des Aktors 27 angeordnet.

### Bezugszeichenliste

- 1: Nadelverschlussdüse
- 2: Kavität
- 4: Spritzgießwerkzeug
- 6: Schmelzeverteiler
- 8: Angussbuchse
- 10: Düse
- 12: Verschlussnadel
- 13: Nadelspitze
- 14: Dichtbuchse
- 20: Polymerantriebsanordnung
- 22: erstes elektroaktives Polymer
- 24: zweites elektroaktives Polymer
- 26: Drucksensor
- 27: Aktor
- 28: Dielektrikum
- 32: Steuerleitung
- 33: Sensorleitung
- 34: Gegenhalter
- 36: Nadelplatte
- 40: Steuerungseinrichtung

## Patentansprüche

1. Nadelverschlussdüse (1), umfassend eine Düse (10) und eine Verschlussnadel (12), die an einem ersten Ende eine Nadelspitze (13) zum Verschluss der Düse (10) aufweist, wobei die Verschlussnadel (12) an einem der Nadelspitze (13) abgewandten zweiten Ende eine Polymerantriebsanordnung (20) aufweist, die ein elektroaktives Polymer umfasst, wobei sich das elektroaktive Polymer unter einer angelegten elektrischen Spannung sein Volumen ändert und als Aktor (27) wirkt, und wobei das elektroaktive Polymer unter Belastung seine elektrischen Eigenschaften ändert und dadurch als Drucksensor (26) wirkt, **dadurch gekennzeichnet, dass** die wenigstens eine Polymerantriebsanordnung (20) unter elektrischer Spannung, die als ein Steuersignal von einer Steuerungseinrichtung (30) bereitgestellt wird, als Antrieb die Nadelspitze (13) im Bereich der Düse (10) bewegt, wobei ein auf die Nadelspitze (13) wirkender Druck eines Fluids, das an der Düse (10) anliegt, an dem Drucksensor (26) zu einer Änderung elektrischer Eigenschaften führt, die als ein Sensorsignal der Steuerungseinrichtung (30) zur Auswertung zugeleitet wird, um das Sensorsignal dort zu einem Wert für einen an der Nadelspitze (13) vorherrschenden Fluiddruck verarbeitet zu werden.

2. Nadelverschlussdüse nach Anspruch 1, wobei sich das elektroaktive Polymer unter einer angelegten elektrischen Spannung zusammenzieht und die wenigstens eine Polymerantriebsanordnung (20) unter elektrischer Spannung die Nadelspitze (13) aus der Düse (10) gleitet und deren Querschnitt zumindest teilweise freigibt, während die Nadelspitze (13) ohne Steuersignal im spannungsfreien Zustand vom sich ausdehnenden elektroaktiven Polymer in die Düse (10) gedrückt wird und deren Querschnitt zumindest teilweise verschließt.

3. Nadelverschlussdüse nach Anspruch 1 oder 2, wobei die wenigstens eine Polymerantriebsanordnung (20) oder ein Piezokristall als Drucksensor (26) eingesetzt ist.

4. Nadelverschlussdüse einem der Ansprüche 1 bis 3, wobei als elektroaktives Polymer der Polymerantriebsanordnung (20) ein dielektrisches Elastomer eingesetzt ist.

5. Nadelverschlussdüse nach einem der Ansprüche 1 bis 4, wobei die Änderung elektrischer Eigenschaften eine Spannungsänderung ist, wobei die Spannungsänderung eine von dem Drucksensor (26) auf einer von der wenigstens einen Polymerantriebsanordnung (20) abgegebene Spannung durch mechanische Einwirkung der Verschlussnadel (12) auf die Polymerantriebsanordnung (20), ohne dass das Steuersignal anliegt, ist, oder wobei die Spannungsänderung an dem Drucksensor (26) eine Spannungsänderung des an der wenigstens einen Polymerantriebsanordnung (20) anliegenden Steuersignals ist.

6. Nadelverschlussdüse nach einem der Ansprüche 1 bis 5, wobei die wenigstens eine Polymerantriebsanordnung (20) als eine sensomotorische Einheit ausgeführt ist, bei der das elektroaktive Polymer (23, 24) sowohl als Aktor (27) als auch als Drucksensor (26) wirkt.

7. Nadelverschlussdüse nach einem der Ansprüche 1 bis 5, wobei die wenigstens eine Polymerantriebsanordnung (20) ein erstes elektroaktives Polymer (23), das als Aktor (27) wirkt, und ein zweites elektroaktives Polymer (24) umfasst, das als Drucksensor (26) wirkt.

8. Nadelverschlussdüse nach Anspruch 7, wobei das erste elektroaktive Polymer (23) und das zweite elektroaktive Polymer (24) über ein gemeinsames Dielektrikum (28) verbunden sind.

9. Nadelverschlussdüse nach Anspruch 8, wobei das erste elektroaktive Polymer (23) und das zweite elektroaktive Polymer (24) nach einer ersten Ausführungsform nebeneinander und nach einer zweiten Ausführungsform ineinander angeordnet sind.

10. Nadelverschlussdüse nach Anspruch 7, wobei das erste elektroaktive Polymer (23) und das zweite elektroaktive Polymer (24) übereinander angeordnet sind.

11. Nadelverschlussdüse nach einem der vorherigen Ansprüche, wobei das Fluid eine Kunstharzmasse, der Fluiddruck ein Schmelzedruck und die Nadelverschlussdüse (12) Teil eines Heißkanalsystems für den Spritzguss von Kunststoffteilen ist.

12. Nadelverschlussdüse nach einem der vorherigen Ansprüche, wobei mehrere Polymerantriebsanordnungen (20) an einer Hubplatte zum Steuern mindestens einer Verschlussnadel (12) angeordnet sind.

13. Gehäuse zur Aufnahme der wenigstens einen Polymerantriebsanordnung (20) nach einem der Ansprüche 1 bis 12, wobei das Gehäuse eine Kühlung umfasst und wobei Gehäuse in axialer Richtung der mindestens einen Verschlussnadel (12) verstellbar ist.
